Europäisches Patentamt

European Patent Office

Office européen des brevets

(19)

(11) Veröffentlichungsnummer: **0 202 344**
**B1**

(12) **EUROPÄISCHE PATENTSCHRIFT**

(45) Veröffentlichungstag der Patentschrift:
20.12.89

(21) Anmeldenummer: 85103547.7

(22) Anmeldetag: 26.03.85

(51) Int. Cl.⁴: **B 60 P 3/22,** F 02 G 5/00,
F 01 N 5/02, F 01 N 3/10,
B 60 H 1/20, F 01 N 3/02,
B 60 P 3/20, F 25 B 27/02

(54) Vorrichtung zur Wärmeentziehung aus den Auspuffgasen eines Verbrennungsmotors.

(30) Priorität: 28.03.84 DE 3411358

(43) Veröffentlichungstag der Anmeldung:
26.11.86 Patentblatt 86/48

(45) Bekanntmachung des Hinweises auf die Patenterteilung:
20.12.89 Patentblatt 89/51

(84) Benannte Vertragsstaaten:
AT BE CH DE FR GB IT LI LU NL SE

(56) Entgegenhaltungen:
EP-A- 0 100 547
CH-A- 130 051
DE-A- 1 924 141
DE-A- 2 004 909
FR-A- 623 442
FR-A- 891 106
FR-A- 1 012 042
FR-A- 2 109 753
FR-A- 2 122 867
FR-A- 2 331 681
FR-A- 2 396 162
FR-A- 2 487 056
GB-A- 797 783
GB-A- 2 114 913
US-A- 3 056 662
US-A- 3 257 798

(73) Patentinhaber: Richter, Gerhard, Matzenberger
Strasse 141-149, D-4200 Oberhausen 11 (DE)

(72) Erfinder: Richter, Gerhard, Matzenberger
Strasse 141-149, D-4200 Oberhausen 11 (DE)

(74) Vertreter: Kiefer, Winfried, Dipl.-Phys., Kasinostrasse 13,
D-4100 Duisburg 1 (DE)

(56) Entgegenhaltungen: (Fortsetzung)
US-A- 3 662 542
US-A- 3 888 084
US-A- 4 341 088
US-A- 4 424 671

AUTOMOTIVE ENGINEERING; Band 89, Nr. 3, März 1981,
Dallas, Texas, US, Seiten 78-92
PATENTS ABSTRACTS OF JAPAN, Band 8, Nr. 174
(M-316) (1611), 10. August 1984
PATENT ABSTRACTS OF JAPAN, Band 8, Nr. 263,
(M-342) (1700), 4. Dezember 1984

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Wärmeentziehung aus den Auspuffgasen eines Verbrennungsmotors, mit einem Wärmetauscher und einer Einrichtung, der die entzogene Wärme von einem im geschlossenen Kreislauf strömenden Medium zuführbar ist, insbesondere für Tanksattelzüge zum Transport von flüssigen Gütern oberhalb ihrer Erstarrungstemperatur.

Im Sinne der Erfindung sind unter flüssigen Gütern solche zu verstehen, deren Erstarrungstemperatur so liegt, daß unter den herrschenden Umgebungstemperaturen sie zumindest teilweise im Tank erstarren können, wobei vor allem der Tank im Bereich der Hinterachse durch die hohen Strömungsgeschwindigkeiten des Fahrtwindes einer verstärkten bzw. beschleunigten Abkühlung ausgesetzt ist.

Unter flüssigen Gütern sind zu verstehen: Pthalsäureanhydrid, Maleinsäureanhydrid, Terepthalsäureanhydrid und dergleichen, chemische Vorprodukte, weiterhin Schwefel, Bitumen, Fette, Fettsäuren, Öle usw.

In Sinne der Erfindung sind unter Einrichtungen, denen die entzogene Wärme zugeführt wird, Heizungen für Kraftfahrzeuge, Kabinenheizungen für Schiffe, auf den Tanks von Tanksattelzügen aufgeschweißte Rohre usw. zu verstehen.

Unter Verbrennungsmotoren sind Ottomotoren und Dieselmotoren für Straßenfahrzeuge, wie zum Beispiel Personenkraftwagen, Lastwagen, Omnibusse usw. zu verstehen.

Prinzipiell kann die Einrichtung, die dem Wärmeübertragungsöl die Wärme entzieht ein zweiter Wärmetauscher sein, der vom Fahrtwind durchströmt bzw. umströmt ist, und kann ein an sich bekannter Kühler sein. Die Einrichtung kann eine Heizung für das Fahrerhaus von Lastzügen sein, wobei dann ein weiterer vom Fahrtwind beaufschlagter Kühler zusätzlich vorgesehen ist, der in die Temperaturregelung einbezogen ist.

Es kann auch Wasser als die Wärme transportierendes Medium zum Einsatz kommen.

Tanksattelzüge zum Transport von flüssigen Gütern oberhalb ihrer Erstarrungstemperatur dienen vorzugsweise zum Transport chemischer Produkte, wie zum Beispiel Pthalsäureanhydrid, Maleinsäureanhydrid, Fetten, Teerprodukten usw., von den Chemiewerken zu den Verarbeitern, die daraus Endprodukte, zum Beispiel Kunststoffprodukte, herstellen.

Schwierigkeiten treten dadurch auf, daß die Erstarrungstemperaturen im allgemeinen weit oberhalb der üblichen Lufttemperatur liegen, zum Beispiel bei 130 °C für Pthalsäureanhydrid.

Es besteht somit stets die Gefahr, daß diese Produkte zumindest teilweise erstarren bzw. erstarrt sind, wenn sie bei den Verarbeitern ankommen. In diesen Fällen müssen sie vor dem Ablassen aus dem Tank zunächst auf eine genügend hohe Temperatur gebracht werden.

In der Praxis hat man bisher durch auf den Tank aufgeschweißte Rohre beziehungsweise Halbrohre Dampf aus ortsfesten Dampferzeugungsanlagen unter einem Druck von 5 bis 7 bar geleitet.

Nur so war es bisher möglich, auch bei arktischer Kälte Ferntransporte derartiger Produkte durchzuführen, wobei je nach den herrschenden Temperaturen nach mehr oder weniger langen Fahrzeiten diese stationären Dampferzeugerstationen angefahren werden mußten und die zwischenzeitlich erfolgten Wärmeverluste des Tankinhalts kompensiert wurden.

Nachteilig ist insbesondere, daß aufgrund der hohen Dampfdrücke relativ dickwandige und somit schwere Hohlprofile auf den Tank aufgeschweißt werden müssen, so daß zwangsweise die Nutzlast verringert wird.

Nachteilig ist weiterhin, daß durch dieses wechselweise Beheizen des Tanks erhebliche, insbesondere kurzzeitige Temperaturschwankungen auftreten, die aufgrund des in den Hohlprofilen herrschenden hohen Druckes des Dampfes beim Aufheizen und durch die damit verbundenen Spannungsschwankungen zu Rissen an den Schweißnähten und zu Auswölbungen der Tankwand im Bereich der Hohlprofile führen.

Es zeigt sich, daß in der Praxis Längenänderungen an den Tanks bis zu 40 und 50 Millimetern beim Einleiten der heißen Produkte auftreten.

Hiervon abgesehen, treten bereits Spannungen auf, wenn in einen kalten Tank die chemischen Produkte im Chemiewerk eingeleitet werden, die Temperaturen bis 200 °C aufweisen können. So hat zum Beispiel Pthalsäureanhydrid eine Temperatur von 160 °C beim Einleiten in einen Tank.

Neben diesen technischen Problemen treten noch weitere Nachteile auf:

Falls ein wenn auch nur teilweise erstarrtes Produkt aufgeheizt wird, treten lokale Überhitzungen und damit auch Verfärbungen auf, so daß das Produkt unbrauchbar wird. Der Grund liegt vor allem darin, daß auch nach einem nur teilweise Erstarren ein Produkt beim Aufheizen nicht mehr in allen Bereichen im erforderlichen Maße zirkulieren kann.

Gleichzeitig erfolgt, wenn unterwegs keine bzw. eine nicht ausreichende Wärmeübertragung erfolgt, eine Temperaturabnahme des eingefüllten Produktes durch die Wärmeabgabe an den kalten Tank.

Es sind auch Versuche mit elektrischen Heizbändern bekannt geworden, die auf die Tankwand gewickelt werden.

Es zeigt sich jedoch, daß diese Art der Wärmeübertragung auf das Produkt erhebliche Energiemengen erfordert und daß die Wärmeübertragung von den Heizbändern auf den Tank schlecht ist.

Eine beachtliche Gefahrenquelle besteht darin, daß sich in der Isolierung Dämpfe dieser chemischen Produkte ansammeln können, die bei einem Schadhaftwerden der elektrischen Anlagen Explosionen auslösen können.

Diese Wärmeübertragung mit Heißdampf war bisher die einzige Lösung, die sich bisher in der Praxis durchsetzen konnte, während alle anderen bisher bekannten Lösungen in der Praxis gescheitert sind.

Es sind Tankwagen mit einem Wärmetauscher bekannt (FR-A-1 012 042), dessen Wärmeübertragungsrohre in dem Tank angeordnet sind und die von den heißen Verbrennungsgasen durchströmt werden.

Diese Tankwagen dienen zum Transport von flüssigen Brennstoffen bzw. Heizöl, dessen Viskosität bei niedrigen Temperaturen so ansteigen kann, daß es nach einer längeren Fahrzeit nicht mehr abgepumpt werden kann. Zur Abhilfe wird deshalb entweder dem Kühlkreislauf des Motors oder den heißen Verbrennungsgasen Wärme entzogen und auf den Tankinhalt übertragen.

Zur Übertragung der Wärme aus den heißen Abgasen ist ein Wärmetauscher vorgesehen, der im Bypass zur Auspuffleitung im Tank angeordnet ist und Rohre aufweist, die von den heißen Verbrennungsgasen durchströmt werden. Zur gesteuerten Abgabe der Wärme an den Tankinhalt sind Ventile und ein Temperaturfühler vorgesehen.

Der Wärmetauscher weist ein hohlzylindrisches Gehäuse auf, das mit den Stirnseiten der Tankwände eine Kammer begrenzt. Sie weist Wasser als Wärmeübertragungsmedium auf und ist mit einem Ausgleichsgefäß verbunden. In der Kammer sind die Wärmeübertragungsrohre angeordnet, die mit den seitlichen Tankwänden verbunden sind und mit den Kammern in kommunizierender Verbindung stehen.

Die heißen Verbrennungsgase werden über eine Abzweigleitung der Auspuffanlage zugeführt, durchströmen das Rohrbündel und strömen über eine weitere Leitung und die Auspuffanlage ab. Die mit Wasser gefüllte Kammer ist vorgesehen, um zu vermeiden, daß durch mögliche Überhitzungen der Rohre im Tank befindliches Heizöl entzündet werden kann.

Es ist weiterhin bekannt (DE-A 1 924 141), Kraftfahrzeuge mit einer Vorrichtung zu beheizen, die einen von den heißen Verbrennungsgasen des Verbrennungsmotors durchströmten Wärmetauscher aufweist. Dieser Wärmetauscher wird von einem in geschlossenem Kreislauf geführten Medium durchflossen. Dieses Medium kann eine verdampfbare Flüssigkeit, zum Beispiel Diphenyl oder isomeres Triaryldimethan sein, das die aufgenommene Wärme in einem zweiten Wärmetauscher an zuströmende Luft abgibt, die dann dem Wageninneren zugeführt wird.

Der Erfindung liegt die Aufgabe zugrunde, eine Vorrichtung zur Wärmeentziehung aus den Auspuffgasen eines Verbrennungsmotors, mit einem Wärmetauscher und einer Einrichtung, der die entzogene Wärme von einem im geschlossenen Kreislauf strömenden Medium zuführbar ist, insbesondere für Tanksattelzüge zum Transport von flüssigen Gütern oberhalb ihrer Erstarrungstemperatur, zu schaffen, die einen so hohen Wirkungsgrad aufweist, daß auch bei extrem niedrigen Temperaturen und/oder langen Fahrstrecken ein Transport von flüssigen Gütern oberhalb ihrer Erstarrungstemperatur sicher gewährleistet ist, insbesondere ein Anfahren von Stationen zum Aufheizen des Tankinhalts nicht mehr erforderlich ist.

Diese Aufgabe wird erfindungsgemäß dadurch gelöst, daß das strömende Medium ein Wärmeübertragungsöl ist und daß der Wärmetauscher im Anschluß an den Auspuffkrümmer des Verbrennungsmotors in die Auspuffanlage integriert ist und eine von den Verbrennungsgasen durchströmtes Bündel von Rohren aufweist, wobei das Wärmeübertragungsöl die Rohre im Gegenstrombzw. im Kreuzstromprinzip anströmt, bzw. der Wärmetauscher so ausgebildet ist, daß das Wärmeübertragungsöl die Rohre durchströmt.

Es zeigt sich überraschenderweise, daß aufgrund der hohen Wärmekapazität des Wärmeübertragungsöls bereits relativ geringe Mengen ausreichen, um in zuverlässiger Weise dafür zu sorgen, daß auch ein teilweises Erstarren des Tankinhalts bei entsprechender Strömungsgeschwindigkeit des Wärmeübertragungsöls sicher unterbunden ist.

Prinzipiell ist es möglich, auf den Tank in seiner Längsrichtung durchgehende Hohlprofile aufzuschweißen, die von dem Wärmeübertragungsöl durchflossen werden. Da das Wärmeübertragungsöl nicht unter hohem Druck steht wie der bisher verwendete Dampf, kann die Wandstärke der Hohlprofile entsprechend geringer gewählt werden als bisher.

Insbesondere werden die Schweißnähte bei der Wärmeübertragung auf den Tankinhalt nicht mehr hohen Drücken ausgesetzt, so daß die Gefahr von Spannungsrissen praktisch vermieden wird.

Ein weiterer wesentlicher Vorteil besteht darin, daß beim Anfahren eines chemischen Werkes der Tank auf die Temperatur des einzufüllenden flüssigen Gutes vorgewärmt werden kann, so daß auch bei extrem niedrigen Außentemperaturen bereits von da aus die Materialbeanspruchungen des Tanks wesentlich herabgesetzt werden können.

Gleichzeitig wird der Temperaturabfall des Gutes im Tank wesentlich vermindert.

Durch die erfindungsgemäßen Maßnahmen wird während der Fahrt laufend durch das Wärmeübertragungsöl Wärme an den Tankinhalt abgegeben, so daß die von da bisher aufgetretenen Temperaturschwankungen in der Tankwand wegfallen und sich im Tank keine kalten Stellen bilden können, an denen der Tankinhalt erstarren kann.

Es ist insbesondere möglich, die Hohlprofile so anzuordnen und auszubilden, daß während der Fahrt die Verluste kompensiert werden, so daß nach Beendigen langer Strecken der Tankinhalt am Fahrziel die gleiche Temperatur hat wie zu Beginn der Fahrt, und zwar in allen Bereichen, so daß auch der Tank im wesentlichen die gleiche Temperatur an allen Stellen hat.

Weiterhin hat die große Wärmekapazität des Wärmeübertragungsöls den Vorteil, daß bei relativ kurzzeitigen Fahrtunterbrechungen keine merkliche Abkühlung erfolgen kann.

Dadurch, daß der Wärmeaustauscher hinter dem Auspuffkrümmer des Verbrennungsmotors in die Auspuffanlage integriert ist, wird erreicht, daß die heißen Abgase praktisch ohne vorherigen Wärmeverlust dem Wärmetauscher zugeführt werden.

Überraschenderweise zeigte es sich, daß in den Fällen, in denen die heißen Verbrennungsgase das Rohrbündel des Wärmetauschers durchströmen, zusätzlich die Auspuffgeräusche herabgesetzt werden. In diesen Fällen ist der Wärmetauscher ein Dämpfungselement der Auspuffanlage. Im Sinne der Erfindung ist unter integriert zu verstehen, daß bei entsprechender Auslegung des Wärmetauschers unter Berücksichtigung der weiteren Daten der Auspuffanlage eine Geräuschdämpfung erzielt wird.

Der Geräuschdämpfung kann bei allen Verbrennungsmotoren, und zwar sowohl bei Personenkraftwagen als auch bei Nutzfahrzeugen wie Tanksattelzügen, Lastkraftwagen, weiterhin Omnibussen, Schiffsantrieben usw., vorgesehen werden.

Weiterhin wird durch diese Ausbildung erreicht, daß ein Umrüsten ohne weiteres möglich ist, indem anstelle eines Abschnittes der Auspuffleitung dieser Wärmetauscher eingebaut wird.

Ein besonderer Vorteil liegt jedoch in der überraschend großen Dämpfung dieses Wärmetauschers. Die Ausbildung kann auch so getroffen sein, daß das Wärmeübertragungsöl die Rohre durchfließt. Allgemein weisen die Auspuffgase einen hohen Gehalt an Schadstoffen auf, die teilweise in an sich bekannter Weise durch den Einsatz von Katalysatoren abgebrannt werden, wobei dann zusätzliche Wärme entsteht.

Diese Wärme kann insbesondere bei Tanksattelzügen nutzvoll zur Aufrechterhaltung der Temperatur des Tankinhalts verwendet werden, wenn diese Wärme abgeführt werden muß, was in der Praxis stets der Fall ist.

In einer weiteren Ausgestaltung der Erfindung sind die Verbrennungsmotoren Dieselmotoren, wobei in der Auspuffleitung vor dem Wärmetauscher eine Einrichtung zum Nachverbrennen der in den Verbrennungsgasen von Dieselmotoren enthaltenen Rußpartikel angeordnet ist.

Die Einrichtung weist in einer weiteren vorteilhaften Ausgestaltung der Erfindung eine in Strömungsrichtung der Verbrennungsgase gerichtete Düse für die Zufuhr von Kraftstoff und/oder Luft auf.

In einer weiteren Ausgestaltung der Erfindung ist die Düse in Abstand vor einer Umlenkfläche angeordnet, wobei in Strömungsrichtung der Verbrennungsgase im Bereich der Umlenkfläche ein von den Verbrennungsgasen durchströmter Keramikeinsatz angeordnet ist.

Durch diese Maßnahmen wird erreicht, daß durch die Flamme die kontaminierten Rußpartikel und zugleich die auf ihnen befindlichen Schadstoffe verbrannt werden.

Die Umlenkfläche bewirkt, daß die auf sie gerichtete Flamme zu einer Flammenwand in Richtung zu der Düse umgelenkt wird, so daß praktisch sämtliche Rußpartikel verbrannt werden.

Zusätzlich heizt sich die Umlenkfläche auf. Sie besteht deshalb aus einem hochtemperaturbeständigen Material, wie zum Beispiel Keramik.

Im letzteren Falle heizt die Umlenkfläche den durchströmten Keramikeinsatz auf, der durch die dann in ihm ablaufenden Verbrennungsvorgänge, bei denen der Ruß mit den Schadstoffen verbrannt wird, so stark erhitzt wird, daß die Düse bezüglich der Brennstoffzufuhr abgeschaltet werden kann.

Die Anordnung und Ausbildung der Düse ist erfindungsgemäß so getroffen, daß in Abhängigkeit der Temperatur des Keramikeinsatzes Luft auf die Umlenkfläche geleitet wird, die sich mit den Verbrennungsgasen vermischen und für deren Verbrennung im Keramikeinsatz sorgt.

Zusätzlich ist in dem Keramikkörper bzw. hinter ihm ein Temperaturfühler angeordnet, der zur Steuerung bzw. Regelung der Luftzufuhr zur Düse dient.

Die zusätzlich erzeugte Wärme wird mittels des Wärmetauschers entzogen.

Bei Ottomotoren tritt an die Stelle der Düse und des Keramikkörpers im allgemeinen ein Keramikkörper mit Platin als Katalysatormaterial.

In einer weiteren Ausgestaltung der Erfindung ist die Summe der Querschnitte der von den Auspuffgasen durchströmten Rohre gleich dem Querschnitt des Auspuffrohres. Durch diese Maßnahmen wird erreicht, daß kein Rückstau am Verbrennungsmotor aufgrund der erfindungsgemäßen Maßnahmen eintreten kann. Generell ist hierbei darauf zu achten, daß der gesamte Strömungsquerschnitt der Auspuffanlage der erfindungsgemäßen Vorrichtung, wie zum Beispiel der Wärmetauscher und der weiteren unten beschriebenen Einrichtungen, sich nicht ändert, damit konstruktive Eingriffe am Verbrennungsmotor nicht erforderlich sind und damit keine Maschinenschäden auftreten.

Um die Wärme optimal auf den Tankinhalt zu übertragen, sind in einer weiteren Ausgestaltung der Erfindung gemäß einem ersten Ausführungsbeispiel auf dem Tank in Längsrichtung Gruppen von dem Wärmeübertragungsöl durchströmten Rohren angeordnet, wobei die Gruppen hintereinander angeordnet und durch flexible Leitungen miteinander verbunden sind. Durch diese Maßnahme wird erreicht, daß der Tank in seiner Längsrichtung in Zonen unterteilt ist, die in Längsrichtung aufgeschweißte Halbrohre aufweisen bzw. nicht, wobei die Halbrohre zu Gruppen angeordnet sind. Erfindungswesentlich sind die flexiblen, die Gruppen verbindenden Leitungen, so daß unter sehr extremen Verhältnissen, wie zum Beispiel arktischen Temperaturen, der Tank Längenänderungen folgen kann, ohne daß die bisher üblichen Zugspannungen über die gesamte Länge auftreten können.

In einer weiteren Ausgestaltung weist der Tank mindestens im Bereich der Hinterachse ein schalenförmig ausgebildetes, vom Wärmeübertragungsöl durchströmtes flaches Hohlprofil auf, das am Tank angeschweißt oder wannenförmig ausgebildet und mit Laschen und Spannbolzen lösbar befestigt sein kann.

Alle diese Maßnahmen können bei Tanksattelzügen vorgesehen sein, sind jedoch nicht auf sie beschränkt. Unter Tanksattelzügen sind somit im Sinne der Erfindung alle Nutzfahrzeuge zu verstehen, die einen Tank zum Transport von auf einer vorgegebenen Temperatur zu haltenden Gütern aufweisen, d. h. auch Tankzüge, Lastzüge mit aufgesetztem Tank usw.

Bei der erfindungsgemäßen Vorrichtung erfolgt ein Abkühlen der Abgase auf eine Temperatur, bei der die Schadstoffe ausgefällt werden können.

Der Erfindung liegt die noch weitere Aufgabe zugrunde, die Vorrichtung weiterhin so auszubilden, daß Güter unterhalb einer vorgegebenen Temperatur, wie zum Beispiel verflüssigte Gase, feste Güter wie Früchte, Geflügel sicher transportiert werden.

Zur Lösung dieser Aufgaben ist in einer weiteren Ausgestaltung der Erfindung in dem Kreislauf des Wärmeübertragungsöls der Kocher mindestens einer Absorptionskältemaschine angeordnet, wobei die Absorptionskältemaschine zum weiteren Abkühlen der Verbrennungsgase nach ihrem Durchströmen des vom Wärmeübertragungsöl durchflossenen Wärmetauschers dient.

Durch diese Maßnahme wird erreicht, daß die Verbrennungsgase so weit herabgekühlt werden können, daß praktisch die Schadstoffe in einem dem Auspuff vorgeschalteten bzw. in ihn integrierten Sammelbehälter aufgefangen bzw. herausgewaschen werden können.

Insbesondere ist es möglich, zum Beispiel die Schwefelsäure durch Kalkmilch auszufällen.

Entsprechend können andere, mit betreffenden wässerigen Lösungen chemisch reagierende Schadstoffe ausgefällt werden.

In einer noch weiteren Ausgestaltung der Erfindung weist der von den heißen Verbrennungsgasen durchströmte, vom Wärmeübertragungsöl durchflossene Wärmetauscher eine Einrichtung zum zusätzlichen Aufheizen bzw. Aufheizen des Wärmeübertragungsöls während den Standzeiten des Tanksattelzuges auf.

Durch diese Maßnahmen wird erreicht, daß dann, wenn der Verbrennungsmotor im unteren Lastbereich betrieben und zuwenig Wärme an das Wärmeübertragungsöl abgegeben wird, zusätzlich Wärme erzeugt werden kann.

Diese Einrichtung ist auch bei langen Standzeiten des Tanksattelzuges erforderlich, wenn aufgrund extrem niedriger Umgebungstemperaturen die Temperatur des Tankinhalts unterhalb einer vorgegebenen Temperatur abzusinken droht. Sie dient zugleich zur Nachverbrennung der Rußpartikel in den Dieselabgasen.

In einer noch weiteren Ausgestaltung der Erfindung ist zum Transport von flüssigen bzw. gasförmigen, unterhalb einer vorgegebenen Mindesttemperatur zu haltenden Gütern das den Kreislauf durchströmende Wärmeübertragungsöl zur Wärmeabgabe nur dem Kocher einer mit dem Tank thermisch gekoppelten Absorptionskältemaschine oder nur dem Kocher der Absorptionskältemaschine und dem Kühler geregelt zugeführt, wobei die Absorptionskältemaschine mit dem als Kühltank ausgebildeten Tank in thermischer Verbindung steht.

Durch diese Maßnahmen wird erreicht, daß der Tank als Kühltank ausgebildet ist. Derartige Tanksattelzüge dienen zum Transport von verflüssigten Gasen, zum Beispiel Erdgas, sowie Flüssigkeiten, die bei den üblichen Umgebungstemperaturen einen hohen Dampfdruck aufweisen bzw. die bei diesen Temperaturen leicht entzündbar sind, wie zum Beispiel Kerosin. Dadurch, daß zum Beispiel Kerosin auf eine möglichst niedrige Transporttemperatur gehalten wird, wird die Transportsicherheit erhöht.

Die Temperatur des Tankinhalts des Kühltanks wird mittels des Kühlers, der vom Fahrtwind durchströmt wird, geregelt. Auch in diesem Falle ist es zweckmäßig, hinter dem von den heißen Verbrennungsgasen durchströmten und vom Wärmeübertragungsöl durchflossenen Wärmetauschers eine Einrichtung zum zusätzlichen Aufheizen bzw. Aufheizen des Wärmeübertragungsöls während den Standzeiten des Tanksattelzuges vorzusehen, damit die Temperatur des Kühltanks unter allen Betriebsbedingungen nicht ansteigt.

Dies gilt selbstverständlich auch für den Fall, daß der Verbrennungsmotor im unteren Lastbereich betrieben wird und zuwenig Wärme an das Wärmeübertragungsöl abgegeben wird.

In einer weiteren Ausgestaltung der Erfindung ist die Einrichtung zur Abgabe der den heißen Verbrennungsgasen entzogenen Wärme der Kocher mindestens einer Absorptionskältemaschine und der Tank der isolierte Aufbau eines Transportfahrzeuges zum Transport von unterhalb einer vorgebbaren Mindesttemperatur zu haltenden festen Gütern.

Anstelle eines Kühltanks zum Transport von flüssigen, verflüssigbaren bzw. gasförmigen Gütern tritt ein wärmeisolierter Container bzw. ein üblicher kälteisolierter Aufbau, in den die Absorptionskältemaschine integriert ist und deren Kocher, wie oben beschrieben, in dem Kreislauf des Wärmeübertragungsöls angeordnet ist.

Die Erfindung wird anhand von in der Zeichnung dargestellten Ausführungsbeispielen erläutert. Es zeigen:

Fig. 1 einen Tanksattelzug in Seitenansicht,
Fig. 2 die schematische Anordnung der zu Gruppen zusammengefaßten Halbrohre aus Fig. 1,
Fig. 3 einen Schnitt senkrecht zur Längsachse des Tanks bei einem Ausführungsbeispiel der Erfindung,
Fig. 4a, 4b einen Schnitt senkrecht zur Längsachse des Tanks bei einem weiteren Ausführungsbeispiel der Erfindung,
Fig. 5a, 5b ein Ausführungsbeispiel für einen Wärmetauscher in Draufsicht und im Längsschnitt,
Fig. 6 ein Ausführungsbeispiel eines Wärmetauschers für einen Personenkraftwagen,
Fig. 7 ein Ausführungsbeispiel für eine Baueinheit für die Auspuffanlage von Dieselmotoren,
Fig. 8–10 weitere Ausführungsbeispiele mit einem zusätzlichen Kühler bzw. mit einer Absorptionskältemaschine.

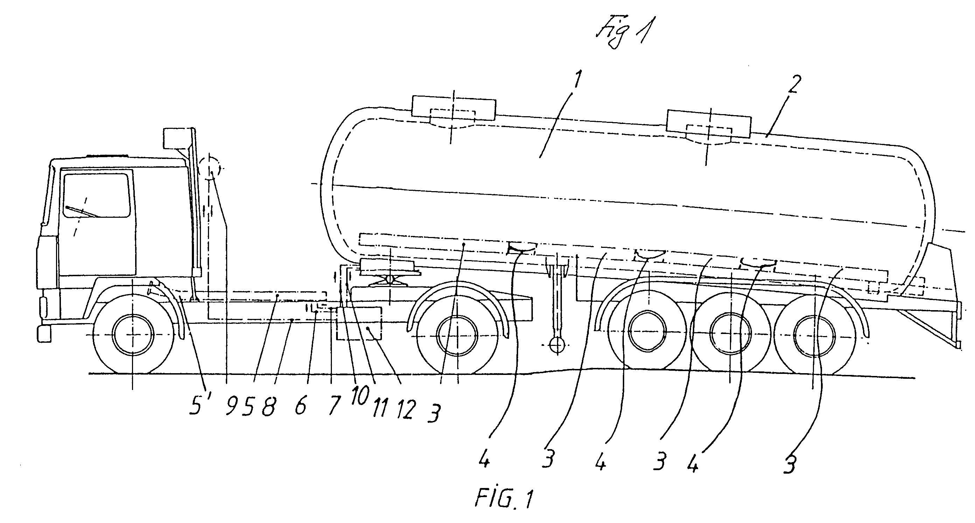

Fig. 1 zeigt in Seitenansicht einen Tanksattelzug. Mit 1 ist der Tank bezeichnet, der eine Isolierung 2 aufweist. Unterhalb der Isolierung sind auf den Tank vier Gruppen 3 von Halbrohren aus Edelstahl aufgeschweißt, die von Wärmeübertragungsöl durchflossen werden. Die Gruppen sind über flexible Schläuche 4 miteinander verbunden. Hierdurch ist der Tank in seiner Längsrichtung in Zonen mit und ohne Gruppen unterteilt, so daß der Tank Wärmedehnungen besser folgen kann als in den Fällen, in denen durchgehende Halbrohre aufgeschweißt sind.

Das Wärmeübertragungsöl wird durch die Wärme der heißen Verbrennungsgase des Motors aufgeheizt. Zu diesem Zwecke ist im Anschluß an den Auspuffkrümmer 5' ein Wärmetauscher 5 in die Auspuffanlage integriert. Mit 6 ist der Vorlauf zum Wärmetauscher, mit 7 der Rücklauf vom Wärmetauscher, mit 8 die Rohrleitung zum Ausdehnungsgefäß, mit 9 das Ausdehnungsgefäß, mit 10 der Vorlauf zum Behälter, mit 11 der Rücklauf zur Pumpe und mit 12 die Pumpe bezeichnet. Das Wärmeübertragungsöl wird in einem geschlossenen Kreislauf in an sich bekannter Weise geführt. Aufgrund seiner großen Wärmekapazität und der guten Wärmeübertragung ist beim Anfahren eines chemischen Werkes schon nach einer relativ kurzen Fahrstrecke der Tank vorgewärmt. Die Anordnung der Wärmeübertragungsrohre ist nur schematisch dargestellt. Es liegt im Rahmen der Erfindung ihre Anordnung und Anzahl so zu treffen, daß der Tank möglichst in allen Bereichen die gleiche Temperatur hat.

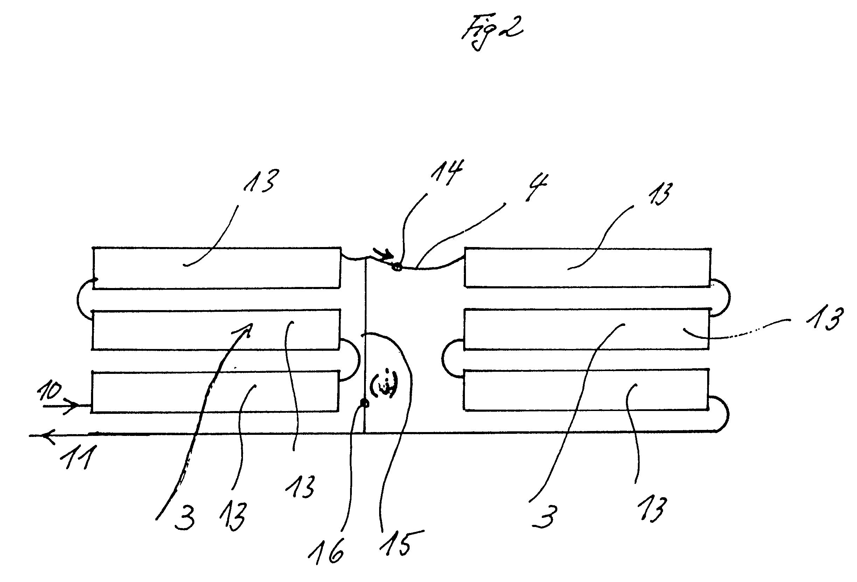

Fig. 2 zeigt schematisch die Anordnung der zu Gruppen zusammengefaßten Halbrohre, die mit 13 bezeichnet sind. Die Halbrohre der einzelnen Gruppen werden nacheinander vom Wärmeübertragungsöl durchströmt. Gleiches gilt für die Gruppen, die ebenfalls nacheinander durchströmt werden. Die Anordnung kann auch so getroffen sein, daß die Halbrohre der einzelnen Gruppen parallel durchströmt werden. Fig. 2 zeigt die Anordnung von zwei Gruppen. Die flexible Leitung 4 weist ein Ventil 14 auf, vor dem ein Rohr bzw. eine Schlauchleitung 15, in der ein Ventil 16 angeordnet ist, abzweigt und mit dem Rücklauf zur Pumpe verbunden ist. Je nach der Stellung der Ventile ist der Durchfluß durch die Schlauchleitung 15 bzw. durch den flexiblen Schlauch 4 geperrt bzw. herabgesetzt. Durch diese Maßnahmen ist es möglich, einzelne Gruppen in Fig. 1 mehr oder weniger mit Wärmeübertragungsöl zu versorgen bzw. einzelne Gruppen zu sperren, indem das in Fig. 2 dargestellte Prinzip entsprechend auf mehrere Gruppen verallgemeinert wird.

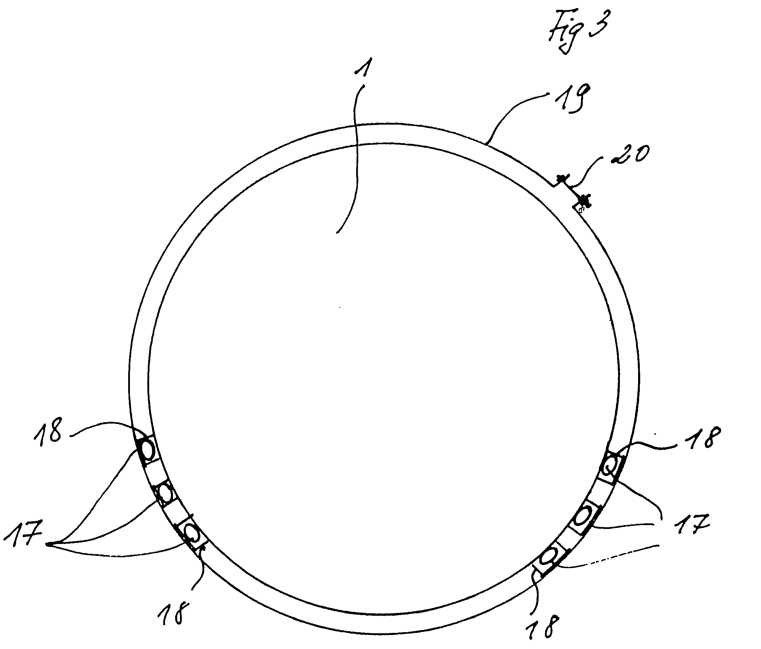

Fig. 3 zeigt einen Schnitt senkrecht zur Längsachse des Tanks in schematischer Darstellung. Die vom Wärmeübertragungsöl durchflossenen Rohre sind mit 17 bezeichnet und haben im vorliegenden Falle einen ovalen bzw. einen derartigen Querschnitt, daß die Fläche zur Wärmeübertragung auf den Tank möglichst groß ist, d. h. daß sie mit einer möglichst großen Kontaktfläche am Tank anliegen. Die Rohre 17 sind von Profilen 18 von U-förmigem Querschnitt übergriffen, die ihrerseits von Spannbändern 19 übergriffen sind. Diese Spannbänder sind in an sich bekannter Weise mittels Spannbolzen 20 verspannt, so daß die von dem Wärmeübertragungsöl durchflossenen Rohre unter Spannung gegen den Tank anstehen. Die Spannbänder und die Profile werden von der Tankisolierung übergriffen, die der Übersichtlichkeit halber nicht dargestellt ist. Diese konstruktiven Maßnahmen und die Verbindung der Gruppen in Fig. 1 über flexible Schläuche ist erfindungsgemäß nur dadurch möglich, da das Wärmeübertragungsöl unter einem vernachlässigbaren Druck steht.

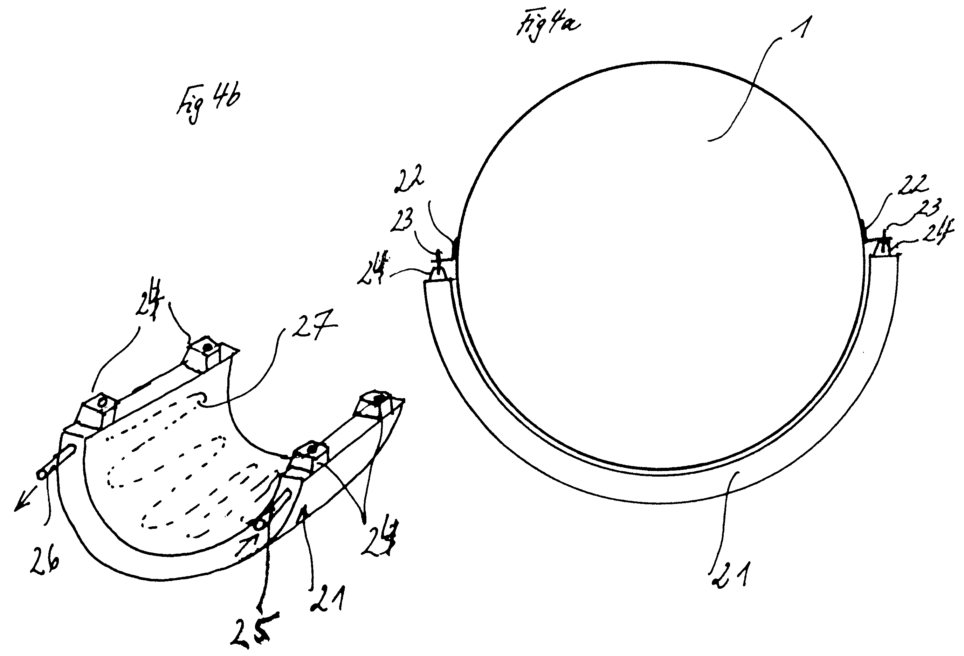

Fig. 4a und 4b zeigen ein weiteres Ausführungsbeispiel für die Wärmeübertragung der Wärme des Wärmeübertragungsöls auf den Tank. Fig. 4a zeigt ebenfalls einen Schnitt senkrecht zur Längsachse des Tanks. Mit 21 ist eine doppelwandige Wanne bezeichnet, die von dem Wärmeübertragungsöl durchflossen wird. Zu ihrer Befestigung sind an dem Tank Laschen 22 angeschweißt, die durch Spannbolzen 23 mit zugeordneten Laschen 24 der Wanne verschraubt sind. Wie aus der Fig. 4a ersichtlich, ist die Wanne im Prinzip ein Ausschnitt aus einem Hohlzylinder, der in sich geschlossen ist. Bei dem Anziehen der Spannbolzen legt sich die Wanne großflächig an den Tank an, so daß der in der Figur der Übersichtlichkeit halber gezeigte Spalt verschwindet. Fig. 4b zeigt in perspektivischer Darstellung die Wanne 21. Sie weist einen Zufluß 25 und einen Abfluß 26 für das Wärmeübertragungsöl auf. Im Innern der Wanne ist mäanderförmig ein Leitblech und Abstandshalter 27 angeordnet, der schematisch strichliert dargestellt ist.

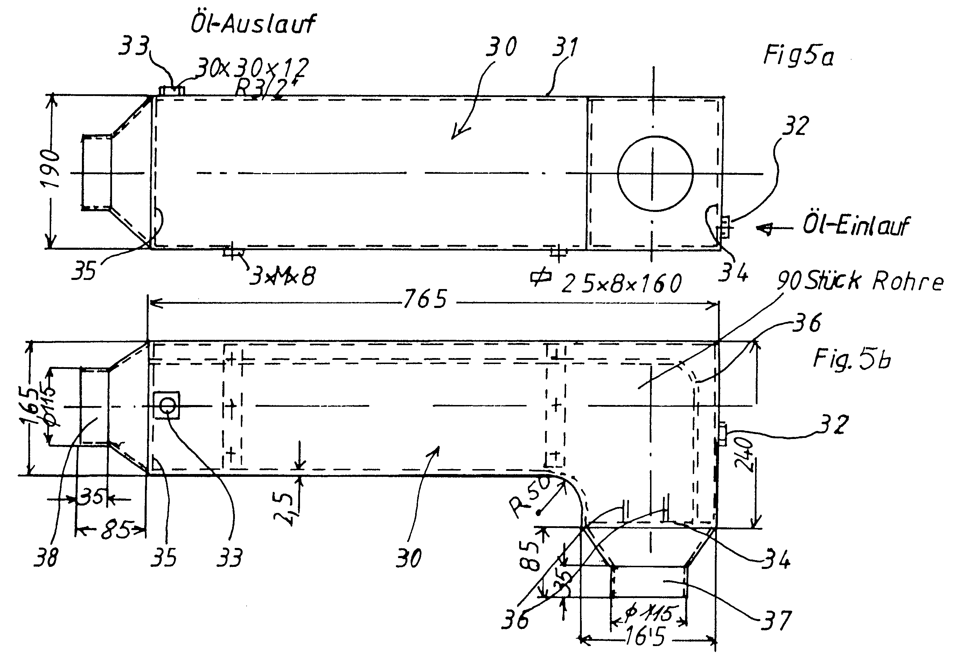

Fig. 5a zeigt ein Ausführungsbeispiel des Wärmetauschers in Draufsicht und Fig. 5b im Längsschnitt. Der mit 30 bezeichnete Wärmetauscher weist ein geschlossenes Gehäuse 31 mit den Anschlüssen 32 und 33 für den Zufluß und den Abfluß des Wärmeübertragungsöls auf. Im Gehäuse sind, mit dessen Stirnwänden 34 und 35 verschweißt, Rohre 36 angeordnet, die von den heißen Abgasen durchströmt werden. Das Gehäuse weist Anschlußstutzen 37 und 38 auf, die eine Anpassung des Querschnitts des Auspuffrohres an den Querschnitt der Stirnwände 34 bzw. 35 vornehmen. Dieser Wärmetauscher wird an die Stelle eines Abschnittes des Auspuffrohres in die Auspuffanlage integriert, wobei durch eine entsprechende Bemessung dafür gesorgt ist, daß die Strömungswiderstände sich nicht ändern, um Schäden am Verbrennungsmotor bzw. konstruktiver Änderungen am Verbrennungsmotor zu vermeiden.

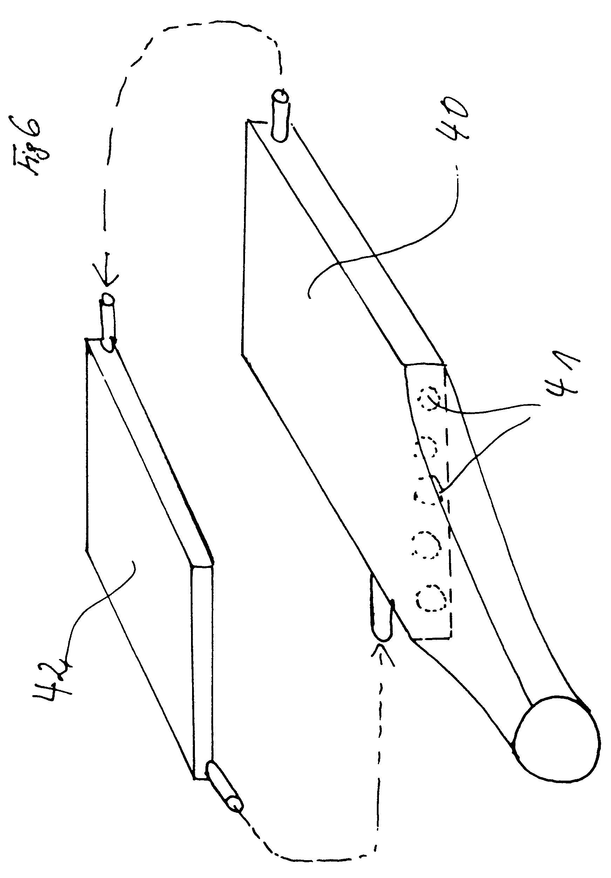

Fig. 6 zeigt ein weiteres Ausführungsbeispiel für einen Wärmetauscher, der beispielsweise bei Personenkraftwagen zum Einsatz kommt. Der Wärmetauscher ist mit 40 bezeichnet und weist von den heißen Verbrennungsgasen durchströmte Rohre 41 auf. Sie werden nach dem Querstromprinzip von Wärmeübertragungsöl angeströmt, das in einem geschlossenen Kreislauf geführt ist und einen zweiten Wärmetauscher durchströmt. Dieser ist mit 42 bezeichnet und gibt den heißen Verbrennungsgasen entzogene Wärme an die Umgebung bzw. in das Wageninnere ab. Der Wärmetauscher 40 kann auch direkt in wärmeleitenden Kontakt mit der Unterseite des Wagenbodens stehen. Er kann auch so angeordnet und ausgebildet sein, daß er einen Teil der Wärme an das Wageninnere abgibt und den verbleibenden Teil an die Umgebung abstrahlt. Insbesondere kann die Anordnung so getroffen sein, daß der Fahrtwind ausreicht, um die überschüssige Wärme abzuführen, wobei die Ausbildung und Anordnung so getroffen sein kann, daß der zweite Wärmetauscher entfällt.

Dadurch, daß den heißen Verbrennungsgasen Energie entzogen wird, werden die Auspuffgeräusche vermindert. Aus diesem Grunde ist der Wärmetauscher auch dann in vorteilhafter Weise einsetzbar, wenn die ihnen entzogene Wärme an anderer Stelle an die Umgebung ohne vorherige Nutzung abgegeben werden muß. Insoweit sind die erfindungsgemäßen Maßnahmen bei allen Verbrennungsmotoren anwendbar, bei denen die Herabsetzung der Auspuffgeräusche wesentlich ist.

In den Fällen, in denen die Wärmeenergie der Auspuffgase nutzbringend zum Einsatz kommt, wird der Wirkungsgrad durch eine Nachverbrennung der Verbrennungsgase heraufgesetzt. Gleichzeitig wird der Vorteil erreicht, daß die Schadstoffbelastung der Umwelt entscheidend herabgesetzt wird.

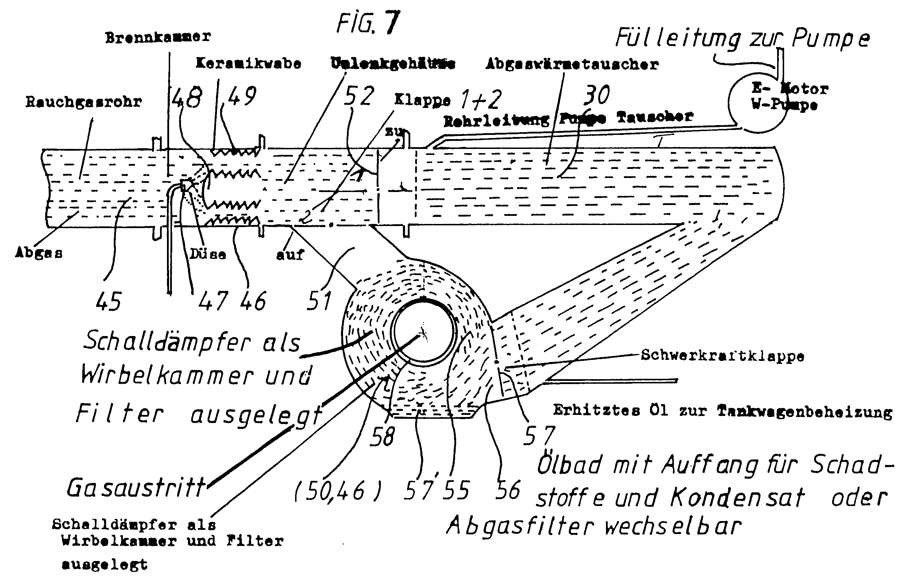

Fig. 7 zeigt in schematischer Darstellung eine Baueinheit, die zum Nachverbrennen der Verbrennungsgase von Dieselmotoren und zum Entzug der Wärme und damit zur Geräuschdämpfung dient, wobei die entzogene Wärme beispielsweise an den Tankinhalt des in Fig. 1 dargestellten Tanksattelzuges abgegeben wird.

Mit 45 ist das Rauchgasrohr bzw. das Auspuffrohr hinter einem nicht dargestellten Turbolader bezeichnet. An dieses ist eine Kammer 46 angeflanscht. Sie weist eine Düse 47 für die Zufuhr von Kraftstoff und/oder Luft auf. In Strömungsrichtung der Verbrennungsgase ist hinter der Düse eine Keramikplatte 48 angeordnet, die in wärmeleitenden Kontakt mit einem von den Verbrennungsgasen durchströmten Keramikkörper 49 steht. An die Kammer 46 ist der in Fig. 5 dargestellte Wärmetauscher 30 angeflanscht, an den der Schalldämpfer 50 angeschlossen ist. Von der Kammer 46 führt ein Abzweig 51 zum Schalldämpfer. Sie weist zwischen dem Abzweig und vor dem Wärmetauscher eine Klappe 52 auf, so daß wahlweise durch ein entsprechendes Verstellen der Klappe der Wärmetauscher im Bypass überbrückt werden kann.

Mittels der Düse 47 wird eine Flamme erzeugt, die von der Keramikplatte umgelenkt wird, so daß die Verbrennungsgase eine Flammenwand passieren und dann durch den Keramikkörper strömen, wobei der Ruß einschließlich der auf den Rußteilchen befindlichen Schadstoffe verbrannt wird. Nach dem Aufheizen des Keramikkörpers auf eine genügend hohe Temperatur wird anstelle von Kraftstoff über die Düse Luft zugeführt, wobei durch die Verbrennung des Rußes die Temperatur des Keramikkörpers aufrechterhalten wird.

Zusätzlich ist in dem Keramikkörper bzw. hinter ihm ein Temperaturfühler angeordnet, der zur Steuerung bzw. Regelung der Luftzufuhr zur Düse dient. Die zusätzlich erzeugte Wärme wird mittels des Wärmetauschers entzogen. Bei Ottomotoren tritt an die Stelle der Düse und des Keramikkörpers im allgemeinen ein Keramikkörper mit Platin als Katalysatormaterial.

Prinzipiell ist es möglich, die Kammer 46 mit Düse und Keramikkörper bzw. mit einem Katalysatormaterial versehenen Keramikkörper und dem Wärmetauscher als Baueinheit in eine Baueinheit zu integrieren. Im allgemeinen kann jedoch die Temperatur der Verbrennungsgase so herabgesetzt werden unter allen Betriebsbedingungen, daß hinter dem Wärmetauscher die aus Fig. 7 ersichtliche erfindungsgemäße Einrichtung nachgeordnet werden kann. Sie besteht aus einer hohlzylinderförmigen Kammer 55 mit einem tangentialen Eintritt für die aus dem Wärmetauscher austretenden Verbrennungsgase. Diese Kammer ist im Ausführungsbeispiel mit horizontaler Achse angeordnet und weist am Eintritt 56 für die Verbrennungsgase eine Klappe 57 auf, die sich aufgrund ihres Gewichtes und des Druckes der anströmenden Verbrennungsgase verstellt, wobei die Verbrennungsgase tangential in die Kammer 55 eintreten und nach dem Prinzip des Zyklons geführt werden. Im Bereich der Klappe 57 weist die Kammer ein Ölbad 57' auf, durch das bzw. über das die in die Kammer eintretenden Verbrennungsgas streichen müssen. Koaxial zur Kammer ist in ihr ein Filter 58 angeordnet, durch das die Verbrennungsgase aus der Kammer über ein in der Achse angeordnetes Gasaustrittsrohr ins Freie gelangen.

Da die Temperatur der Verbrennungsgase stets hinreichend niedrig gehalten werden kann, ist es möglich, für das Filter 58 ein Papierfilter einzusetzen.

Generell können die Kammer 46, der Wärmetauscher 30 und die Einrichtung zu einer Baueinheit zusammengefaßt werden, die anstelle der üblichen Auspuffanlagen an dem Auspuffkrümmer von Verbrennungsmotoren angeflanscht werden.

Die gekühlten Verbrennungsgase können nach dem Zyklonenprinzip nachgereinigt werden, wobei in einem Ölbad und einem Filter restliche Schmutzpartikel abgeschieden werden.

Falls die Verbrennungsgase nach dem Durchströmen des Wärmetauschers über ein Ölbad und nach dem Prinzip des Zyklons durch eine Wirbelkammer geführt und vor dem Austreten an die Umgebung gegebenenfalls zusätzlich durch ein Filter geleitet werden, werden die restlichen Kondensate und Schadstoffe zurückgehalten.

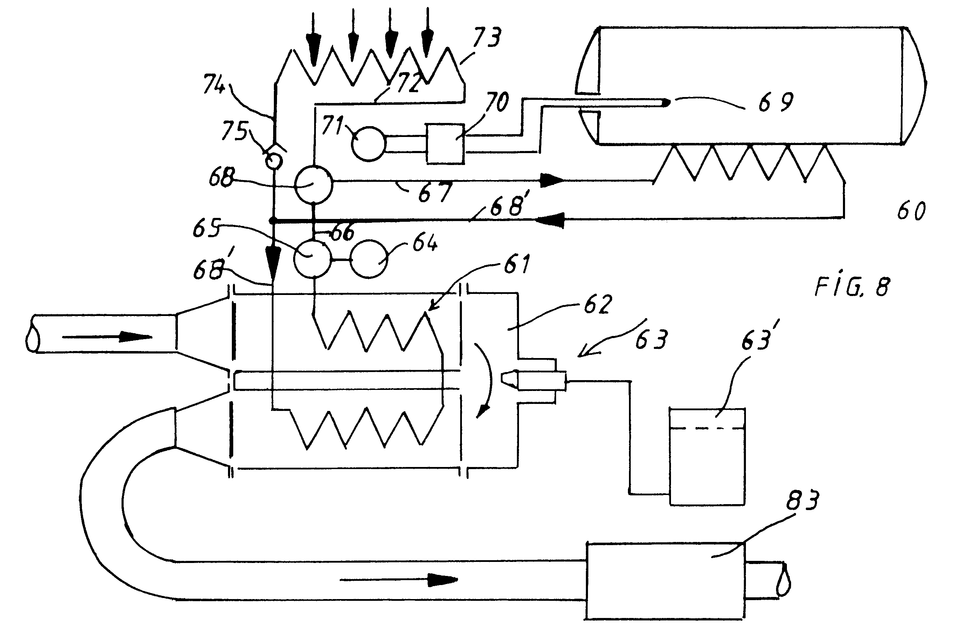

Fig. 8 zeigt in schematischer Darstellung ein Ausführungsbeispiel für einen Tanksattelzug mit beheizbarem Tank, wobei in dem Kreislauf des Wärmeübertragungsöls zusätzlich ein Kühler zur geregelten Abgabe von Wärme an die umgebende Atmosphäre des Tanksattelzuges vorgesehen ist und der von den heißen Verbrennungsgasen durchströmte, vom Wärmeübertragungsöl durchflossene Wärmetauscher eine Einrichtung zum zusätzlichen Aufheizen des Wärmeübertragungsöls aufweist.

Die in Fig. 1 mit 3 bezeichneten Gruppen von Halbrohren sind als Einheit mit 60 bezeichnet. Der von den heißen Verbrennungsgasen durchströmte und vom Wärmeübertragungsöl durchflossene Wärmetauscher ist mit 61 bezeichnet. Er ist nach dem gleichen Prinzip wie der Wärmetauscher 30 aus Fig. 5a bzw. Fig. 5b aufgebaut.

Sein Gehäuse 62 ist so ausgebildet, daß es in die mit 63 bezeichnete Einrichtung zum zusätzlichen bzw. Aufheizen des Wärmeübertragungsöls integriert ist. Sie ist im einfachsten Falle eine Brenndüse, die aus dem Vorratsbehälter 63' mit Brennstoff gespeist wird.

Das im Wärmetauscher 61 aufgeheizte Wärmeübertragungsöl wird von der von dem Motor 64 angetriebenen Pumpe 65 über die Leitung 66, das Stellventil 68 und die Leitung 67 der Einheit 60 zugeführt und kann über die Leitung 68 zum Wärmetauscher 61 zurückströmen. In dem Tank ist der Temperaturfühler 69 angeordnet, der die gemessenen Istwerte an die Vergleichseinrichtung 70 abgibt, die die Istwerte mit einem eingestellten Sollwert vergleicht. In Abhängigkeit der Differenzen der Istwerte von dem jeweiligen Sollwert wird der Motor 71 entsprechend gesteuert, der das Stellventil 68 betätigt.

Je nach der Stellung des Stellventils wird entweder die gesamte Menge des Wärmeübertragungsöls über die Leitungen 67 und 68' geleitet, bzw. wird ein Teil des Wärmeübertragungsöls über das Stellventil dem Kühler 73 über die Leitung 72 zugeführt, über den es Wärme an die umgebende Atmosphäre des Tanksattelzuges abgibt, und über die Leitung 74, das Rückschlagventil 75 und die Leitung 68' zum Wärmetauscher 61 zurückströmt.

Je nach der Stellung des Stellventils 68 wird somit die im Wärmetauscher 61 von dem Wärmeübertragungsöl aufgenommene Wärme entsprechend der Temperatur des Tankinhalts an den Tank bzw. an den Tank und an den Kühler 73 bzw. nur an den Kühler 73 abgegeben. Durch diese Maßnahmen entfallen der Bypass 51 und die Klappe 52 in Fig. 7.

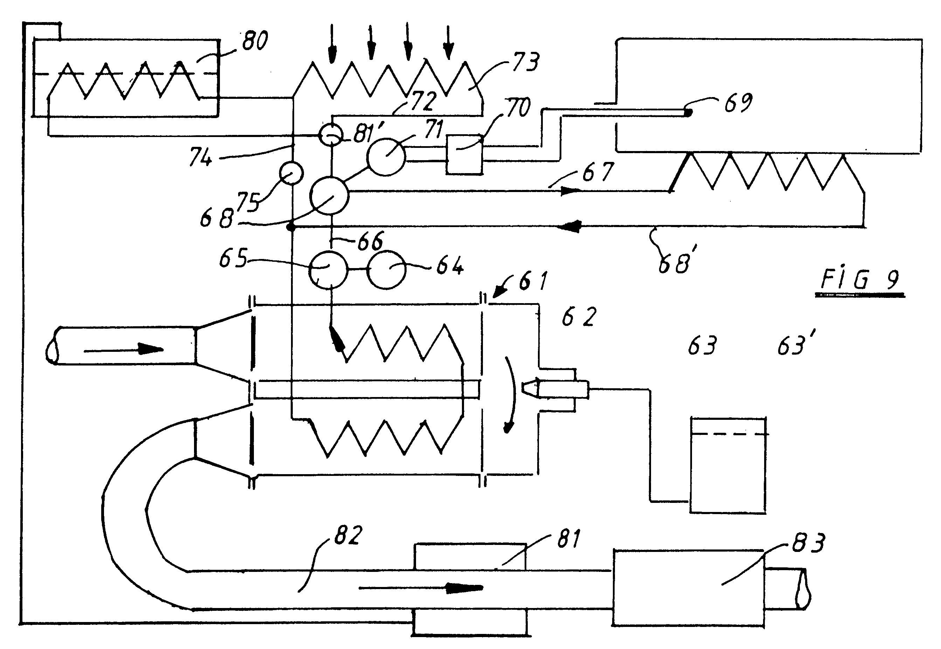

Fig. 9 zeigt in schematischer Darstellung einen Tanksattelzug, wobei in dem Kreislauf des Wärmeübertragungsöls der Kocher mindestens einer Absorptionskältemaschine angeordnet ist und die Absorptionskältemaschine zum weiteren Abkühlen der Verbrennungsgase nach dem Durchströmen des vom Wärmeübertragungsöl durchflossenen Wärmetauschers 61 dient.

Mit der Fig. 8 gleiche Teile sind mit den gleichen Bezugszeichen bezeichnet.

Parallel zum Kühler 73 ist der Kocher 80 einer Absorptionskältemaschine bezeichnet, deren weitere Komponenten zu einer Baueinheit 81 zusammengefaßt sind und im thermischen Kontakt mit der Auspuffleitung 82 vor dem Auspufftopf 83 steht. Der Kocher kann an die Stelle des Kühlers 73 treten.

Es ist auch möglich, durch ein weiteres Stellventil 81' eine Anordnung in der Weise zu treffen, daß in Abhängigkeit der Temperatur im Auspuff das Wärmeübertragungsöl einen entsprechenden Teil der Wärme über den Kühler 73 und den anderen Teil an den Kocher abgibt.

Der Auspufftopf ist so ausgebildet, daß er das Kondensat auffangen kann bzw. Schwefelsäure und dergleichen in einem im Auspufftopf integrierten Behälter ausgefällt werden.

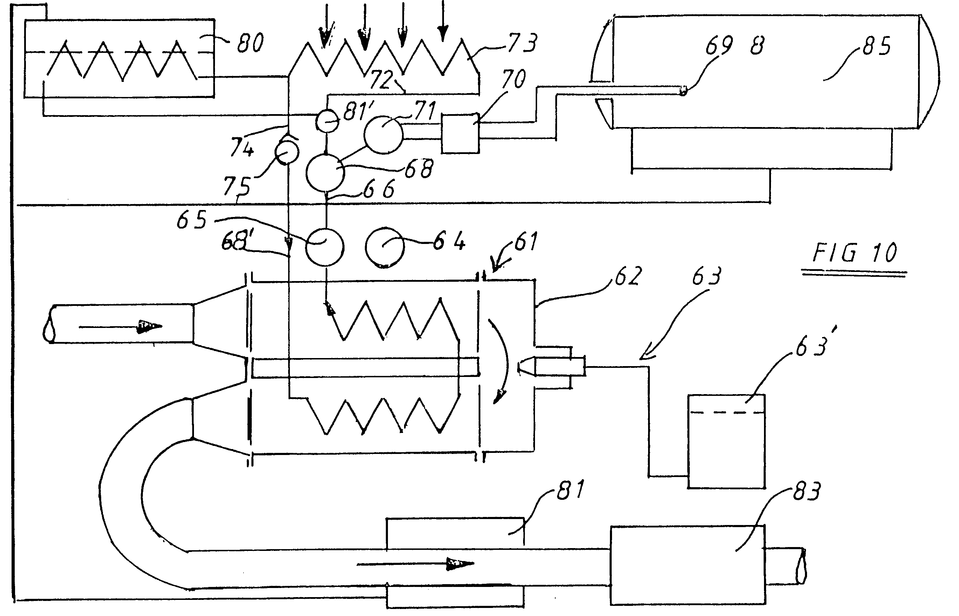

Fig. 10 zeigt einen Tanksattelzug, dessen Tank als Kühltank zum Transport von flüssigen bzw. gasförmigen unterhalb einer vorgegebenen Mindesttemperatur zu haltenden Gütern ausgebildet ist. Das Wärmeübertragungsöl durchströmt zur Wärmeabgabe den Kocher einer mit dem Tank thermisch gekoppelten Absorptionskältemaschine.

Das Ausführungsbeispiel in Fig. 10 ist somit eine Abwandlung des Ausführungsbeispiels in Fig. 9. Mit den Fig. 8 und 9 sind gleiche Teile mit den gleichen Bezugszeichen bezeichnet.

Der Tank ist als Kühltank ausgebildet und mit 85 bezeichnet. Der Kocher 80 ist zwei Kälteabsorptionsmaschinen zugeordnet, deren übrige Komponenten zu einer Baueinheit 81 bzw. 86 zusammengefaßt sind und die mit dem Tank 85 bzw. der Auspuffleistung in thermischem Kontakt stehen. An die Stelle des Tanks 85 kann ein wärmeisolierter Aufbau bzw. Container zum Transport von festen Gütern wie zum Beispiel Früchten, Geflügel usw. treten.

**Patentansprüche**

1. Vorrichtung zur Wärmeentziehung aus den Auspuffgasen eines Verbrennungsmotors, mit einem Wärmetauscher (5) und einer Einrichtung, der die entzogene Wärme von einem in sich geschlossenen Kreislauf strömenden Medium zuführbar ist, insbesondere für Tanksattelzüge zum Transport von flüssigen Gütern oberhalb ihrer Erstarrungstemperatur, dadurch gekennzeichnet, daß das strömende Medium ein Wärmeübertragungsöl ist und daß der Wärmetauscher im Anschluß an den Auspuffkrümmer (5') des Verbrennungsmotors in die Auspuffanlage integriert ist und eine von den Verbrennungsgasen durchströmtes Bündel von Rohren (36) aufweist, wobei das Wärmeübertragungsöl die Rohre im Gegenstrom- bzw. im Kreuzstromprinzip anströmt bzw. der Wärmetauscher so ausgebildet ist, daß das Wärmeübertragungsöl die Rohre durchströmt.

2. Vorrichtung nach Anspruch 1, dadurch gekennzeichnet, daß die Verbrennungsmotoren Dieselmotoren sind und daß zur zusätzlichen Erzeugung von Wärmeenergie vor dem Wärmetauscher eine Einrichtung (46, 47, 48) zum Verbrennen der Rußpartikel angeordnet ist.

3. Vorrichtung nach Anspruch 2, dadurch gekennzeichnet, daß die Einrichtung eine in Strömungsrichtung der Verbrennungsgase gerichteten Düse (47) für die Zufuhr von Kraftstoff und/oder Luft aufweist.

4. Vorrichtung nach Anspruch 3, dadurch gekennzeichnet, daß die Düse (47) in Abstand vor einer Umlenkfläche (48) angeordnet ist und daß in Strömungsrichtung der Verbrennungsgase im Bereich der Umlenkfläche ein von den Verbrennungsgasen durchströmter Keramikeinsatz (49) angeordnet ist.

5. Vorrichtung nach einem der Ansprüche 1 bis 4, dadurch gekennzeichnet, daß die Summe der Querschnitte der Rohre des Wärmetauschers gleich dem Querschnitt des Auspuffrohres ist.

6. Vorrichtung nach einem der Ansprüche 1 bis 5, dadurch gekennzeichnet, daß auf dem Tank (1) in seiner Längsrichtung Gruppen (3) von vom Wärmeübertragungsöl durchströmten (13) Rohren hintereinander angeordnet sind und daß die Gruppen durch flexible Leitungen (4) miteinander verbunden sind.

7. Vorrichtung nach einem der Ansprüche 1 bis 5, dadurch gekennzeichnet, daß der Tank (1) mindestens im Bereich der Hinterachse ein schalenförmig ausgebildetes, vom Wärmeübertragungsöl durchströmtes flaches Hohlprofil (21) aufweist.

8. Vorrichtung nach einem der Ansprüche 1 bis 7, dadurch gekennzeichnet, daß in dem Kreislauf des Wärmeübertragungsöls der Kocher (80) mindestens einer Absorptionskältemaschine angeordnet ist und die Absorptionskältemaschine zum weiteren Abkühlen der Verbrennungsgase nach dem Durchströmen des Wärmetauschers dient.

9. Vorrichtung nach einem der Ansprüche 1 bis 8, dadurch gekennzeichnet, daß der von den heißen Verbrennungsgasen durchströmte Wärmetauscher eine Einrichtung (62) zum zusätzlichen Aufheizen bzw. zum Aufheizen des Wärmeübertragungsöls während der Standzeiten des Tanksattelzuges aufweist.

10. Vorrichtung nach Anspruch 1 und einem der Ansprüche 8 oder 9, jedoch zum Transport von flüssigen bzw. gasförmigen Gütern, die unterhalb einer vorgegebenen Temperatur zu halten sind, dadurch gekennzeichnet, daß das den Kreislauf durchströmende Wärmeübertragungsöl zur Wärmeabgabe nur dem Kocher der Absorptionskältemaschine und dem Kühler (73) geregelt zugeführt wird und daß die Absorptionskältemaschine mit dem als Kühltank ausgebildeten Tank in thermischer Verbindung steht.

11. Vorrichtung nach einem der Ansprüche 8 bis 10, dadurch gekennzeichnet, daß die Einrichtung zur Abgabe der den heißen Verbrennungsgasen entzogene Wärme der Kocher mindestens einer Absorptionskältemaschine ist und daß der Tank der isolierte Aufbau eines Transportfahrzeuges zum Transport von unterhalb einer vorgebbaren Mindesttemperatur zu haltenden festen Güter ist.

## Claims

1. Apparatus for extracting heat from the exhaust gases of a combustion engine, having a heat exchanger (5) and a device to which the heat extracted from a medium flowing in a closed circuit system is suppliable, in particular for tanker-type articulated vehicles for transporting liquid goods above their solidification point, characterized in that the flowing medium is a heat transfer oil, and in that the heat exchanger is integrated into the exhaust system so as to be connected to the exhaust manifold (5') of the combustion engine and has a bundle of tubes (36) through which the combustion gases flow, the heat transfer oil streaming against the tubes in accordance with the countercurrent or crosscurrent principle or the heat exchanger being constructed such that the heat transfer oil flows through the tubes.

2. Apparatus according to Claim 1, characterized in that the combustion engines are diesel engines, and in that a device (46, 47, 48) for combustion of the soot particles is arranged upstream of the heat exchanger for the supplementary generation of thermal energy.

3. Apparatus according to Claim 2, characterized in that the device has a nozzle (47) facing in the direction of flow of the combustion gases, for the supply of fuel and/or air.

4. Apparatus according to Claim 3, characterized in that the nozzle (47) is arranged spaced upstream of a deflection surface (48), and in that there is arranged in the direction of flow of the combustion gases in the region of the deflection surface a ceramic insert (49) through which the combustion gases flow.

5. Apparatus according to one of Claim 1 to 4, characterized in that the sum of the cross-sections of the tubes of the heat exchanger is equal to the cross-section of the exhaust pipe.

6. Apparatus according to one of Claims 1 to 5, characterized in that there are arranged one behind the other on the tank (1), in its longitudinal direction, groups (3) of tubes through which the heat transfer oil flows (13), and in that the groups are connected to one another by flexible lines (4).

7. Apparatus according to one of Claims 1 to 5, characterized in that the tank (1) has at least in the region of the rear axle a dish-shaped shallow hollow section (21) through which heat transfer oil flows.

8. Apparatus according to one of Claims 1 to 7, characterized in that there is arranged in the circuit of the heat transfer oil the boiling apparatus (80) of at least one absorption-type refrigerating machine and the absorption-type refrigerating machine serves for further cooling of the combustion gases after they have flowed through the heat exchanger.

9. Apparatus according to one of Claims 1 to 8, characterized in that the heat exchanger through which the hot combustion gases flow has a device (62) for the supplementary heating up or for the heating up of the heat transfer oil while the tanker-type articulated vehicle is parked.

10. Apparatus according to Claim 1 and one of Claims 8 or 9, but for the transport of liquid or gaseous good which are to be kept below a predetermined temperature, characterized in that the heat transfer oil flowing through the circuit for the giving-off of heat is supplied in regulated manner only to the boiling apparatus of the absorption-type refrigerating machine or only to the boiling apparatus of the absorption-type refrigerating machine and to the radiator (73), and in that the absorption-type refrigerating machine is in thermal connection with the tank, in the form of a refrigerating tank.

11. Apparatus according to one of Claims 8 to 10, characterized in that de device for the giving off of the heat extracted from the hot combustion gases is the boiling apparatus of at least one absorption-type refrigerating machine, and in that the tank is the insulated body of a transport vehicle for transporting solid goods to be kept below a predeterminable minimum temperature.

**Revendications**

1. Dispositif pour absorber la chaleur des gaz d'échappement d'un moteur à combustion, comprenant un échangeur de chaleur (5) et un dispositif vers lequel peut être envoyée la chaleur prélevée d'un fluide circulant dans un circuit fermé, notamment pour des semi-remorques citernes destinées au transport de produits liquides au-dessus de leur température de solidification, caractérisé en ce que le fluide circulant est une huile de transfert de chaleur, et en ce que l'échangeur de chaleur est intégré à l'installation d'échappement en étant raccordé au collecteur d'échappement (5') du moteur à combustion et comprend un faisceau de tubes (36) par lequel passent les gaz de combustion, l'huile de transfert de chaleur circulant dans les tubes selon le principe du contre-courant ou des courants inversés, ou bien l'échangeur de chaleur étant constitué de manière que l'huile de transfert de chaleur parcourt les tubes.

2. Dispositif selon la revendication 1, caractérisé en ce que les moteurs à combustion sont des moteurs Diesel et en ce qu'un dispositif (46, 47, 48) destiné au brûlage des particules de suie est monté en amont de l'échangeur de chaleur en vue de créer de l'énergie thermique additionnelle.

3. Dispositif selon la revendication 2, caractérisé en ce que le dispositif comprend une buse (47) destinée à l'amenée du carburant et/ou de l'air et dirigée dans le sens de l'écoulement des gaz de combustion.

4. Dispositif selon la revendication 3, charactérisé en ce que la buse (47) est disposée à une certaine distance d'une surface de renvoi (48) et en ce qu'un insert en céramique (49) traversé par les gaz de combustion est disposée dans le sens de l'écoulement des gaz de combustion dans la région de la surface de renvoi.

5. Dispositif selon l'une des revendication 1 à 4, caractérisé en ce que la somme des sections des tubes de l'échangeur de chaleur est égale à la section de la conduite d'échappement.

6. Dispositif selon l'une des revendications 1 à 5, caractérisé en ce que des groupes (3) de tubes (13) parcourus par l'huile de transfert de chaleur sont disposés dans le réservoir (1) et dans sa direction longitudinale les uns à la suite des autres, et en ce que les groupes sont reliés les uns aux autres par des conduites flexibles (4).

7. Dispositif selon l'une des revendications 1 à 5, caractérisé en ce que le réservoir (1) comprend au moins dans la région de l'essieu arrière une section profilée creuse et plate (21) constituée sous forme d'une coquille parcourue par l'huile de transfert de chaleur.

8. Dispositif selon l'une des revendications 1 à 7, caractérisé en ce qu'au moins une machine frigorifique à absorption est montée dans le circuit de l'huile de transfert de chaleur de l'échauffeur (80) et la machine frigorifique à absorption sert à refroidir plus complètement les gaz de combustion après leur passage par l'échangeur de chaleur.

9. Dispositif selon l'une des revendications 1 à 8, caractérisé en ce que l'échangeur de chaleur parcouru par les gaz de combustion chauds comprend un dispositif (62) pour chauffer additionnellement ou pour chauffer l'huile de transfert de chaleur pendant les durées d'arrêt de la semi-remorque citerne.

10. Dispositif selon la revendication 1 et l'une des revendications 8 ou 9, mais pour le transport liquides ou gazeux qui doivent être maintenus au-dessous d'une température prédéterminée, caractérisé en ce que l'huile de transfert de chaleur qui circule en circuit fermé est envoyée de façon régulée en vue de l'émission de la chaleur seulement à l'échauffeur de la machine frigorifique à absorption ou seulement à l'échauffeur de la machine frigorifique à absorption et au refroidisseur (73), et en ce que la machine frigorifique à absorption est en liaison thermique avec le réservoir constitué sous forme de réservoir réfrigérant.

11. Dispositif selon l'une des revendications 8 à 10, caractérisé en ce que le dispositif destiné à transmettre la chaleur des réchauffeurs prélevée des gaz de combustion chauds est constitué par au moins une machine frigorifique à absorption et en ce que le réservoir est un élément isolé d'un véhicule de transport destiné au transport de produits solides à maintenir au-dessous d'une température minimale pouvant être prédéterminée.

Fig 1

FIG. 1

EP 0202344 B1

EP 020234 B1

Fig 2

Fig 3

Fig 4b

Fig 4a

EP 020344 B1

Öl-Auslauf

Fig 5a

Öl-Einlauf

Fig. 5b

90 Stück Rohre

EP 0202344 B1

Fig 6

42

40

41

EP 0202344 B1

# FIG. 7

Brennkammer

Keramikwabe  Umlenkgehäuse  Abgaswärmetauscher

Fülleitung zur Pumpe

Rauchgasrohr  48  49  52  Klappe 1+2  30

Rohrleitung Pumpe Tauscher

E- Motor
W-Pumpe

zu

Abgas

Düse  auf

45  47 46  51

Schalldämpfer als
Wirbelkammer und
Filter ausgelegt

Schwerkraftklappe

Erhitztes Öl zur Tankwagenbeheizung

58  57

Gasaustritt

(50,46) 57 55  56

Schalldämpfer als
Wirbelkammer und Filter
ausgelegt

Ölbad mit Auffang für Schadstoffe und Kondensat oder
Abgasfilter wechselbar

EP 0202344 B1

FIG. 8

EP 0202344 B1

FIG 9

FIG 10